# EUROPEAN PATENT APPLICATION

(11) **EP 4 549 832 A1**
(43) Date of publication of application: **07.05.2025**
(21) Application number: 24210208.5
(22) Date of filing: 31.10.2024
(51) Int. Cl.: F24F 11/64, F24F 11/65, F24F 120/20

(54) **METHOD FOR CONTROLLING AIR CONDITIONER, AND AIR CONDITIONER AND STORAGE MEDIUM**

(30) Priority: 02.11.2023 CN 202311467583
(71) Applicant: Xiaomi Technology (Wuhan) Co., Ltd., Wuhan, Hubei 430000 (CN); Beijing Xiaomi Mobile Software Co., Ltd., Beijing 100085 (CN)
(72) Inventor: SONG, Haolin, Wuhan, 430000 (CN)
(74) Representative: Dehns Germany Partnerschaft mbB

(57) **Abstract**

The present disclosure provides a method for controlling an air conditioner, an air conditioner and a storage medium. The method for controlling the air conditioner includes: in response to an operation mode of the air conditioner is a first mode, obtaining (S101, S201) a first parameter value corresponding to a first control parameter in the first mode, wherein the first mode is a mode for controlling an operation of the air conditioner based on a preference; controlling (S102, S202, S303) the operation of the air conditioner based on the first parameter value; in response to the first control parameter being subjected to adjustments, controlling (S 103, S203, S305) the air conditioner based on a second parameter value corresponding to the first control parameter subjected to adjustments, and keeping the first parameter value corresponding to the first control parameter subjected to adjustments unchanged in the first mode.

## Description

### TECHNICAL FIELD

The present disclosure relates to the field of air conditioner technology, in particular, to a method for controlling an air conditioner, and an air conditioner and a storage medium.

### BACKGROUND

With the improvement of people's living standards, air conditioners have entered thousands of households, the use of air conditioners is becoming more and more common, and users' demands for the comfort of using air conditioners are also increasing.

In the related art, operation steps required for controlling of the air conditioner are relatively cumbersome, resulting in low convenience in air conditioner control.

### SUMMARY

The present invention intends to at least partially solve one of the technical problems in the related art.

The present invention provides a method and an apparatus for controlling an air conditioner, an air conditioner, a non-transitory computer-readable storage medium having computer instructions stored thereon, and a computer program product, which can reduce the operation steps required for controlling the air conditioner while supporting users to adjust control parameters, effectively improving the convenience and the flexibility in the air conditioner control.

A first aspect of the present invention provides a method for controlling an air conditioner. The method includes: obtaining, in response to an operation mode of the air conditioner being a first mode, a first parameter value corresponding to a first control parameter in the first mode, wherein the first mode is a mode of controlling an operation of the air conditioner based on a preference; controlling, based on the first parameter value, the operation of the air conditioner; and controlling, in response to the first control parameter being subjected to adjustments, the air conditioner based on a second parameter value corresponding to the first control parameter subjected to adjustments, and keeping the first parameter value corresponding to the first control parameter unchanged in the first mode.

Optionally, the method further includes: controlling, in response to the first control parameter subjected to adjustments being of a preset type, the air conditioner to exit the first mode; and controlling, in response to the first control parameter subjected to adjustments being not of the preset type, the air conditioner to stay in the first mode.

Optionally, the method further includes: in response to a first number of first control parameters subjected to adjustments being less than a total number of first control parameters, controlling the air conditioner based on first parameter values corresponding to first control parameters not subjected to adjustments and second parameter values corresponding to the first control parameters subjected to adjustments.

Optionally, obtaining the first parameter value corresponding to the first control parameter in the first mode includes one of: determining, in response to the first mode being a recommended preference mode, a recommended parameter value corresponding to the first control parameter sent by a server as the first parameter value corresponding to the first control parameter in the recommended preference mode; and determining, in response to the first mode being a custom preference mode, an obtained custom parameter value corresponding to the first control parameter as the first parameter value corresponding to the first control parameter in the custom preference mode.

Optionally, determining the recommended parameter value corresponding to the first control parameter sent by the server as the first parameter value corresponding to the first control parameter in the recommended preference mode includes: receiving, in a first time period after the recommended preference mode is activated, the recommended parameter value corresponding to the first control parameter sent by the server based on a sending cycle; and determining the recommended parameter value as the first parameter value.

Optionally, keeping the first parameter value corresponding to the first control parameter subjected to adjustments unchanged in the first mode includes: in response to the first control parameter being subjected to adjustments in the first time period and the first control parameter subjected to adjustments being not of a preset type, sending a first instruction to the server, wherein the first instruction is configured to instruct the server to stop sending the recommended parameter value corresponding to the first control parameter subjected to adjustments.

Optionally, the method further includes: determining that an adjustment of the operation mode of the air conditioner is completed; and controlling the air conditioner to exit the first mode.

A second aspect of the present invention provides an air conditioner. The air conditioner includes a memory, a processor, and a computer program that is stored on the memory and executable on the processor. The memory stores instructions executable by the at least one processor, which when executed by the at least one processor, cause the at least one processor to be configured to: obtain, in response to an operation mode of the air conditioner being a first mode, a first parameter value corresponding to a first control parameter in the first mode, wherein the first mode is a mode of controlling an operation of the air conditioner based on a preference, and comprises preset correspondence between the first control parameter and the first parameter value; control, based on the first parameter value, the operation of the air conditioner; and control, in response to the first control parameter being subjected to adjustments, the air conditioner based on a second parameter value corresponding to the first control parameter subjected to adjustments, and keep the first parameter value corresponding to the first control parameter subjected to adjustments unchanged in the first mode.

Optionally, the at least one processor is further configured to: control, in response to the first control parameter subjected to adjustments being of a preset type, the air conditioner to exit the first mode; and control, in response to the first control parameter subjected to adjustments being not of the preset type, the air conditioner to stay in the first mode.

Optionally, the at least one processor is further configured to: in response to a first number of first control parameters subjected to adjustments being less than a total number of first control parameters, control the air conditioner based on first parameter values corresponding to first control parameters not subjected to adjustments and second parameter values corresponding to the first control parameters subjected to adjustments.

Optionally, the at least one processor is further configured to perform one of: determine, in response to the first mode being a recommended preference mode, a recommended parameter value corresponding to the first control parameter sent by a server as the first parameter value corresponding to the first control parameter in the recommended preference mode; and determine, in response to the first mode being a custom preference mode, an obtained custom parameter value corresponding to the first control parameter as the first parameter value corresponding to the first control parameter in the custom preference mode.

Optionally, the at least one processor is further configured to: receive, in a first time period after the recommended preference mode is activated, the recommended parameter value corresponding to the first control parameter sent by the server based on a sending cycle; and determine the recommended parameter value as the first parameter value.

Optionally, the at least one processor is further configured to: in response to the first control parameter being subjected to adjustments in the first time period and the first control parameter subjected to adjustments being not of a preset type, send a first instruction to the server, wherein the first instruction is configured to instruct the server to stop sending the recommended parameter value corresponding to the first control parameter subjected to adjustments.

Optionally, the at least one processor is further configured to: determine that an adjustment of the operation mode of the air conditioner is completed; and control the air conditioner to exit the first mode.

A third aspect of the present invention provides a non-transitory computer-readable storage medium having a computer program stored thereon. When the program is executed by a processor, the method for controlling the air conditioner provided in the first aspect of the present invention is caused to be implemented.

According to the present invention, in the case where the air conditioner is intelligently controlled in the first mode based on the preference, if the user has the needs to adjust the control parameters, the operation state of the air conditioner can be further adjusted according to the user's needs, and thus reducing the operation steps required for controlling of the air conditioner, and improving the convenience and the flexibility in the air conditioner control.

The additional aspects and advantages of the present invention will be partially presented in the following descriptions, some of which will become apparent from the following descriptions, or learned through practice of the present invention.

### BRIEF DESCRIPTION OF THE DRAWINGS

The above and/or additional aspects and advantages of the present disclosure will become apparent and will be easily understood from the following descriptions of the embodiments with reference to the drawings, in which:
FIG. 1 is a schematic flowchart of a method for controlling an air conditioner according to one or more embodiments of the present disclosure;
FIG. 1A is a schematic diagram of a control interface for a custom preference mode according to one or more embodiments of the present disclosure;
FIG. 1B is a schematic diagram of a control interface for a recommended preference mode according to one or more embodiments of the present disclosure;
FIG. 1C is a schematic diagram of a control interface of an air conditioner according to one or more embodiments of the present disclosure;
FIG. 2 is a schematic flowchart of a method for controlling an air conditioner according to one or more embodiments of the present disclosure;
FIG. 3 is a schematic flowchart of a method for controlling an air conditioner according to one or more embodiments of the present disclosure;
FIG. 4 is a schematic diagram of a structure of an apparatus for controlling an air conditioner according to one or more embodiments of the present disclosure; and
FIG. 5 shows a block diagram of an air conditioner suitable for implementing one or more embodiments of the present disclosure.

### DETAILED DESCRIPTION

Detailed descriptions of embodiments of the present disclosure will be provided in the following, with examples of embodiments shown in the drawings. Throughout the drawings, the same or similar reference numerals represent the same or similar elements or elements with the same or similar functions. The embodiments described with reference to the drawings in the following are exemplary and are only used to explain the present disclosure, rather than be construed as limiting the present disclosure. On the contrary, embodiments of the present disclosure include all changes, modifications, and equivalents falling within the spirit and scope of the appended claims.

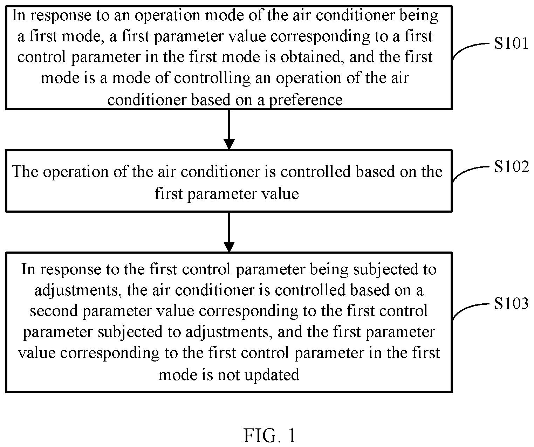

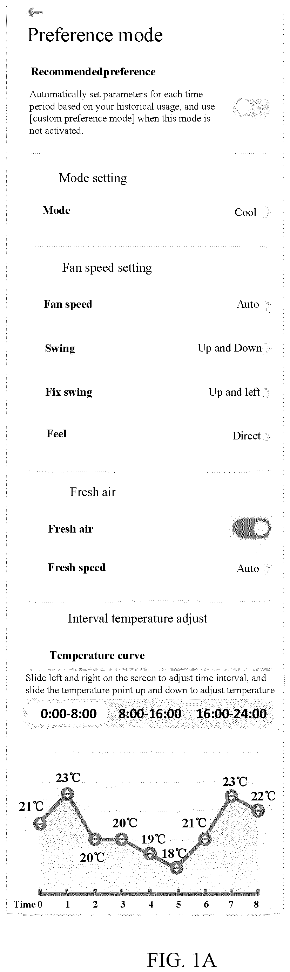

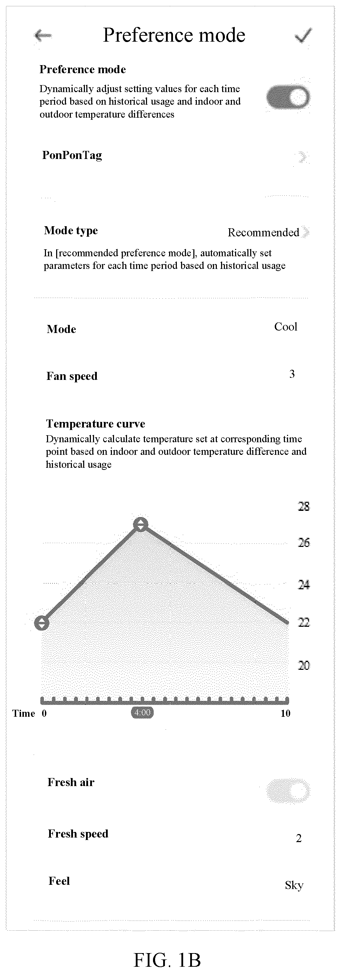

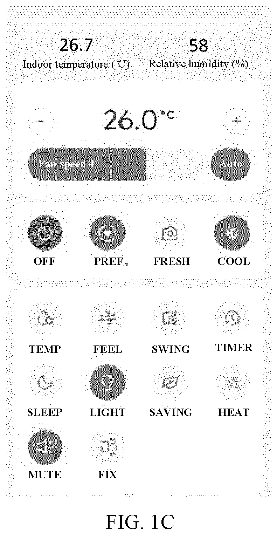

FIG. 1 is a schematic flowchart of a method for controlling an air conditioner according to one or more embodiments of the present disclosure.

Embodiments of the present disclosure are provided by taking a method for controlling an air conditioner that is applied in an apparatus for controlling an air conditioner as an example. In the embodiments of the present disclosure, the method for controlling the air conditioner can be configured in the apparatus for controlling the air conditioner, and the apparatus for controlling the air conditioner can be set in a server, or in an electronic device, or in an air conditioner, which is not limited herein. In some embodiments, that the method for controlling the air conditioner is configured in the electronic device is taken as an example. In some embodiments, the electronic device is a hardware device with various operating systems, such as smartphones, tablets, personal digital assistants, e-books, etc.

It should be noted that an implement entity of embodiments of the present disclosure can be, for example, a central processing unit (CPU) in the server, electronic device, or air conditioner in view of hardware, and can be, for example, a relevant backend service in the server, electronic device, or air conditioner in view of software, which is not limited herein.

As shown in FIG. 1, the method for controlling the air conditioner includes following steps.

In step S 101, in response to an operation mode of the air conditioner being a first mode, a first parameter value corresponding to a first control parameter in the first mode is obtained, and the first mode is a mode of controlling an operation of the air conditioner based on a preference.

In some embodiments, the first mode refers to the mode of controlling the operation of the air conditioner based on the preference. In some embodiments, when the air conditioner is in the first mode, controlling the operation of the air conditioner based on a user preference can be supported. The first mode is, for example, a preference mode. An interface can be configured in the electronic device, on which an enabling control for the first mode is provided. If the user's instructions to activate the first mode is detected based on the control, the air conditioner can be controlled to enter the first mode.

In some embodiments, the first mode can include a recommended preference mode and a custom preference mode. In some embodiments of the present disclosure, after being controlled to enter the first mode, the air conditioner can also support personalized control to multiple preference modes in the first mode.

In some embodiments, in the case where the first mode is the recommended preference mode, a recommended parameter value corresponding to the first control parameter sent by a server can be determined as the first parameter value corresponding to the first control parameter in the recommended preference mode.

In some embodiments, the first control parameters can be, for example, mode (MODE), fan speed (FAN SPEED), swing (SWING), fixed swing (FIX), air feeling (FEEL), fresh air (FRESH), fresh air speed (FRESH SPEED), temperature (TEMP), etc. The number of the first control parameters can be one or multiple, which is not limited in the present disclosure.

In some embodiments, the recommended parameter value can be, for example, the parameter value automatically set by the server for each time period based on the user's historical usage, which is not limited herein.

In some embodiments, the recommended parameter value corresponding to the first control parameter can be received and cached locally in advance, or can be dynamically sent by the server. For example, the recommended parameter value corresponding to the first control parameter can be sent by the server in real-time or sent by the server dynamically according to a sending cycle, which is not limited herein.

In step S 102, the operation of the air conditioner is controlled based on the first parameter value.

In some embodiments of the present disclosure, after the first parameter value corresponding to the first control parameter in the first mode is determined, the operation of the air conditioner can be controlled based on the first parameter value.

In some embodiments, when the first mode is the recommended preference mode, the operation of the air conditioner is controlled based on the recommended parameter value corresponding to the first control parameter. In some embodiments, when the first mode is the custom preference mode, the operation of the air conditioner is controlled based on the custom parameter value corresponding to the first control parameter.

In step S103, in response to the first control parameter being subjected to adjustments, the air conditioner is controlled based on a second parameter value corresponding to the first control parameter subjected to adjustments, and the first parameter value corresponding to the first control parameter subjected to adjustments in the first mode is not updated.

In some embodiments, as shown in FIG. 1A, a schematic diagram of a control interface for the custom preference mode according to one or more embodiments of the present disclosure is provided. FIG. 1A shows the user-defined first parameter values corresponding to each first control parameter in the custom preference mode.

As shown in FIG. 1B, a schematic diagram of a control interface for the recommended preference mode according to one or more embodiments of the present disclosure is provided. After receiving the recommended parameter value corresponding to the first control parameter sent by the server, the recommended parameter value can be displayed to the user through the control interface.

As shown in FIG. 1C, a schematic diagram of a control interface of an air conditioner according to one or more embodiments of the present disclosure is provided. The control interface shown in FIG. 1C can be, for example, an upper-level interface of the control interface shown in FIG. 1A, which can serve as the main control interface. The control preference [PREF] in FIG. 1C can be used to control the air conditioner to be operated in the first mode. In the interface, the controls such as [FEEL], [FAN SPEED], etc. can also be configured. The interface contains a part overlapping with the first control parameter in the interface shown in FIGS. 1A and 1B. When it is detected in FIG. 1C that the first control parameter is adjusted, the air conditioner can be controlled based on the second parameter value after the first control parameter is adjusted, but the first parameter value in FIGS. 1A and 1B will not be changed. At this time, the setting value corresponding to the first control parameter in the main interface is different from the setting value corresponding to the first control parameter in the first mode.

In some embodiments, in the recommended preference mode, if the first parameter value corresponding to the first control parameter is dynamically updated, the dynamically updating of the first parameter value can be stopped. In some embodiments, the first control parameter adjusted in the main interface will no longer change over time in the recommended preference mode.

In some embodiments, if the first number of first control parameters subjected to adjustments is less than the total number of the first control parameters, the air conditioner can be controlled based on a first parameter value corresponding to the first control parameter not subjected to adjustments and a second parameter value corresponding to the first control parameter subjected to adjustments.

In some embodiments, the parameter value corresponding to the first control parameter in the main interface shown in FIG. 1C can be synchronized with the first parameter value corresponding to the first control parameter in the first mode (shown in a preference interface). If the user adjusts the parameter value corresponding to the first control parameter in the main interface, the first parameter value corresponding to the first control parameter in the preference interface will be no longer updated, and the operation of the air conditioner will be controlled based on the second parameter value corresponding to the first control parameter subjected to adjustments in the main interface and the first parameter value corresponding to the first control parameter not subjected to adjustments in the first mode. The first control parameter subjected to adjustments and the first control parameter not subjected to adjustments depend on whether the first control parameter has been adjusted in the main interface.

In some embodiments, all the first control parameters include the fan speed, the air guide control, the fresh air control, and the fresh air shield, and the first control parameters adjusted in the main interface are the fan speed and the air guide control. The first parameter values corresponding to the fan speed and the air guide control in the first mode will be then no longer updated over time, and the air conditioner will be controlled based on the second parameter values obtained after the fan speed and the air guide control are adjusted, and the first parameter values corresponding to the fresh air control and the fresh air shield.

In some embodiments, as shown in FIG. 1C, the main interface also includes a second control parameter that is not available in the first mode, such as the key tone (MUTE) and the light (LIGHT). In some embodiments, the air conditioner can be controlled based on the parameter value corresponding to the second control parameter, the first parameter value corresponding to the first control parameter not subjected to adjustments, and the second parameter value corresponding to the first control parameter subjected to adjustments.

In some embodiments of the present disclosure, when the operation mode of the air conditioner is the first mode, the first parameter value corresponding to the first control parameter in the first mode is obtained. The first mode is the mode of controlling the operation of the air conditioner based on the preference. The air conditioner is then controlled based on the first parameter value. In the case where the first control parameter is adjusted, the air conditioner is controlled based on the second parameter value after the first control parameter is adjusted, and the first parameter value corresponding to the first control parameter in the first mode is not updated. According to embodiments of the present disclosure, in the case where the air conditioner is intelligently controlled in the first mode based on the preference, if the user has the needs to adjust the control parameters, the operation state of the air conditioner can be further adjusted according to the user's needs, and thus reducing the operation steps required for controlling of the air conditioner, and improving the convenience and the flexibility in the air conditioner control.

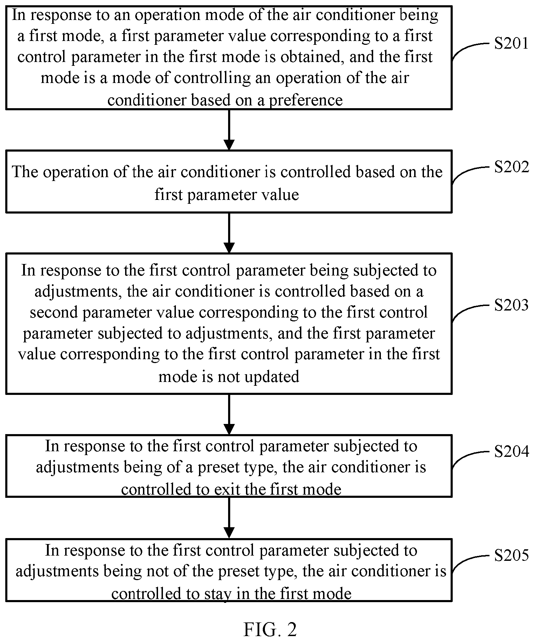

FIG. 2 is a schematic flowchart of a method for controlling an air conditioner according to one or more embodiments of the present disclosure. As shown in FIG. 2, the method for controlling the air conditioner includes following steps.

In step S201, in response to an operation mode of the air conditioner being a first mode, a first parameter value corresponding to a first control parameter in the first mode is obtained, and the first mode is a mode of controlling an operation of the air conditioner based on a preference.

In step S202, the operation of the air conditioner is controlled based on the first parameter value.

In step S203, in response to the first control parameter being subjected to adjustments, the air conditioner is controlled based on a second parameter value corresponding to the first control parameter subjected to adjustments, and the first parameter value corresponding to the first control parameter subjected to adjustments in the first mode is not updated.

The descriptions and explanations of steps S201-S203 can be specifically referred to the above embodiments, and will not be repeated here.

In step S204, in response to the first control parameter subjected to adjustments being of a preset type, the air conditioner is controlled to exit the first mode.

In some embodiments, the preset type can be the temperature or other parameters, which is not specifically limited in the present disclosure.

In some embodiments, if the user adjusts the temperature parameters in the control interface shown in FIG. 1C, it may indicate that the current operation mode of the air conditioner causes the indoor temperature to be inconformity with the user's needs, and the user's preference may have changed. Therefore, the air conditioner can be controlled to exit the first mode.

It should be noted that the operations of step S204 and step S203 can be executed simultaneously or sequentially, which is not limited in the present disclosure.

In step S205, in response to the first control parameter subjected to adjustments being not of the preset type, the air conditioner is controlled to stay in the first mode.

In some embodiments, if the user adjusts other parameters such as the fan speed, the air guide control, the fresh air control, the fresh air shield, etc. in the main interface, the air conditioner will not exit the first mode.

In some embodiments of the present disclosure, when the operation mode of the air conditioner is the first mode, the first parameter value corresponding to the first control parameter in the first mode is first obtained. The first mode is the mode of controlling the operation of the air conditioner based on the preference. The air conditioner is then controlled based on the first parameter value. In the case where the first control parameter is adjusted, the air conditioner is controlled based on the second parameter value after the first control parameter is adjusted, and the first parameter value corresponding to the first control parameter in the first mode is not updated. Whether the air conditioner needs to exit the first mode can also be determined based on the type of the first control parameter subjected to adjustments. As a result, it is not only possible to determine the user's needs based on the first control parameter subjected to adjustments, but also to determine whether to exit the first mode, and thus further increasing the flexibility in the air conditioner control.

In some embodiments, the operation mode of the air conditioner that has been adjusted is determined, and then the air conditioner is controlled to exit the first mode. As a result, the rapidity and flexibility in starting and stopping of the first mode are further improved.

In some embodiments, if the user adjusts the operation mode of the air conditioner to other modes, such as the sleep mode and the energy saving mode, the air conditioner can be controlled to exit the first mode.

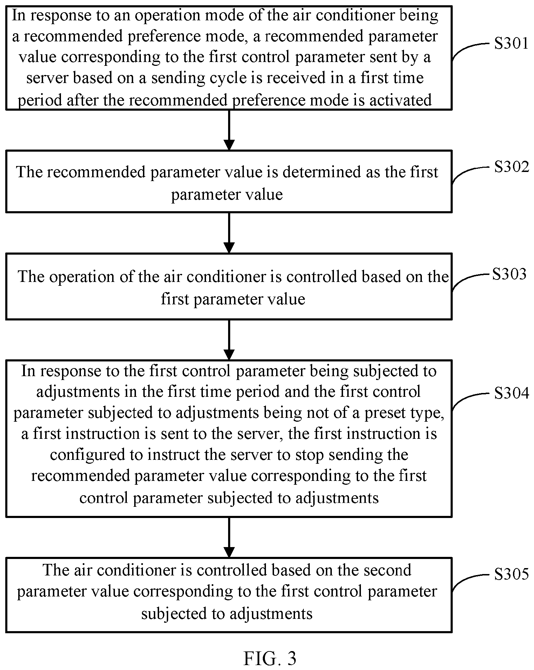

FIG. 3 is a schematic flowchart of a method for controlling an air conditioner according to one or more embodiments of the present disclosure. As shown in FIG. 3, the method for controlling the air conditioner includes following steps.

In step S301, in response to an operation mode of the air conditioner being a recommended preference mode, a recommended parameter value corresponding to the first control parameter sent by a server based on a sending cycle is received in a first time period after the recommended preference mode is activated.

In some embodiments, the first time period and the sending cycle can be values obtained based on big data analysis, which are not excessively limited here. The products of each enterprise can be configured with parameters that are suitable for the actual situation of the enterprise according to different needs and considerations. For example, the first time period can be 30 minutes, 40 minutes, etc., and the sending cycle can be every ten minutes, every five minutes, etc., which are not limited in the present disclosure.

In some embodiments, when the first mode is the custom preference mode, the obtained custom parameter value corresponding to the first control parameter is determined as the first parameter value corresponding to the first control parameter in the custom preference mode.

In some embodiments, the custom parameter value refers to the parameter value obtained by defining the first control parameter by oneself. For example, custom parameter value can be defined based on the user's personalized needs in advance.

In some embodiments, within 30 minutes after the recommendation preference mode is activated, the server calculates the preference of the fan speed every 10 minutes and automatically determines the direction and the level to which the fan speed changes; the server calculates the preference of the air guide plate once and automatically determines the direction and the angle for the air guide plate to change; the server calculates the carbon dioxide concentration once and automatically determines the on/off state of the fresh air control, as well as controls the switch action; the server calculates the user preference once and automatically determines the direction and the level to which the fresh air shield changes. After completing the calculation, the server sends the calculation results to dynamically update and adjust the recommended parameter values corresponding to the first control parameters.

It should be noted that in the first time period just after the air conditioner is turned on, the indoor air environment (including temperature, humidity, etc.) is still in an unstable state, and thus the first control parameter needs to be updated and adjusted based on the sending cycle. After the air conditioner is turned on for a period of time (after the first time period), the indoor air environment is basically adjusted to a stable state, and the air conditioner can be adjusted and operated based on the stable state, without frequent updates, thereby reducing the access pressure to the cloud data and reducing unnecessary calculation and communication pressure.

In step S302, the recommended parameter value is determined as the first parameter value.

In step S303, the operation of the air conditioner is controlled based on the first parameter value.

In step S304, in response to the first control parameter being subjected to adjustments in the first time period and the first control parameter subjected to adjustments being not of a preset type, a first instruction is sent to the server, the first instruction is configured to instruct the server to stop sending the recommended parameter value corresponding to the first control parameter subjected to adjustments.

In some embodiments, the first control parameter subjected to adjustments is not of the preset type, indicating that the current operation mode of the air conditioner is still the recommended preference mode.

It should be noted that if the first control parameter is adjusted in the first time period, and at the moment, the server still calculates and sends the recommended parameter value corresponding to the first control parameter based on the sending cycle, while the parameter value corresponding to the first control parameter subjected to adjustments has already been updated by the user. Therefore, the first instruction can be sent to the server to instruct the server to stop sending the recommended parameter value corresponding to the first control parameter subjected to adjustments, thereby saving computing and communication resources.

In some embodiments, if the first mode is the recommended preference mode, all the first control parameters include the fan speed, the air guide control, the fresh air control, and the fresh air shield, and the first control parameters adjusted in the main interface are the fan speed and the air guide control, then the first instruction will be sent to the server. The user of the first instruction prompts the server to stop calculating the recommended parameter values corresponding to the fan speed and the air guide control, and the server still calculates and sends the recommended parameter values corresponding to the fresh air control and the fresh air shield.

In step S305, the air conditioner is controlled based on the second parameter value corresponding to the first control parameter subjected to adjustments.

It should be noted that the step of controlling the air conditioner based on the second parameter value and the step of sending the first instruction to the server can be executed simultaneously or sequentially, which is not limited in the present disclosure.

In some embodiments of the present disclosure, when the operation mode of the air conditioner is the recommended preference mode, in the first time period after the recommended preference mode is activated, the recommended parameter value corresponding to the first control parameter sent by the server based on the sending cycle is received, and then the operation of the air conditioner is controlled based on the recommended parameter value. Next, if the first control parameter is adjusted in the first time period and the first control parameter subjected to adjustments is not of the preset type, the server is instructed to stop sending the recommended parameter value corresponding to the first control parameter subjected to adjustments, and the air conditioner is controlled based on the second parameter value corresponding to the first control parameter subjected to adjustments. As a result, in the case where the first control parameter has been adjusted by the user, the server can be instructed to stop updating the first control parameter subjected to adjustments, thereby improving the convenience and the flexibility in the air conditioner control, while saving resources.

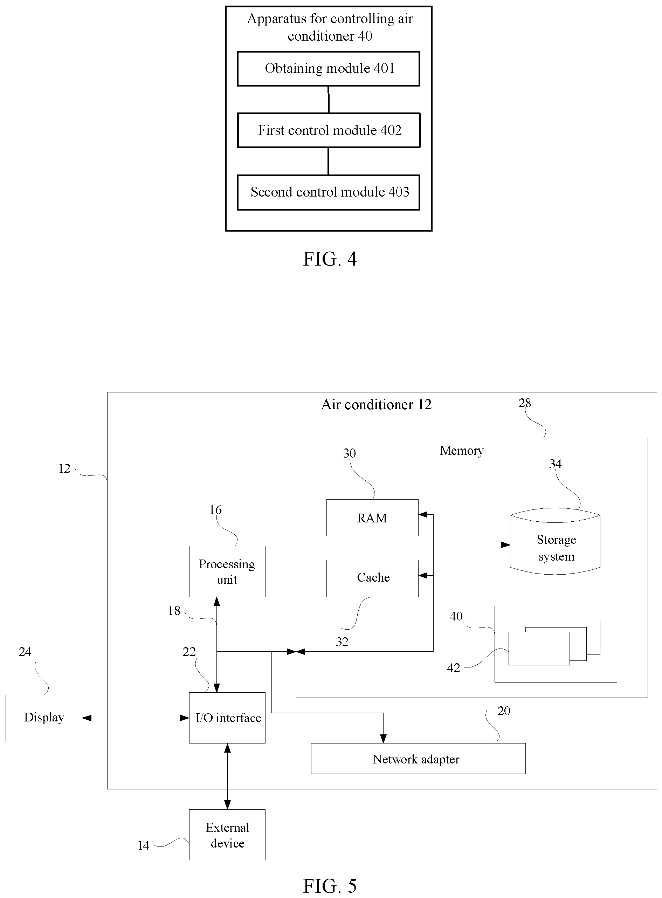

FIG. 4 is a schematic diagram of a structure of an apparatus for controlling an air conditioner according to one or more embodiments of the present disclosure.

As shown in FIG. 4, the apparatus 40 for controlling the air conditioner includes an obtaining module 401, a first control module 402, and a second control module 403.

The obtaining module 401 is configured to obtain, in response to an operation mode of the air conditioner being a first mode, a first parameter value corresponding to a first control parameter in the first mode, the first mode being a mode of controlling an operation of the air conditioner based on a preference.

The first control module 402 is configured to control the operation of the air conditioner based on the first parameter value.

The second control module 403 is configured to control, in response to the first control parameter being subjected to adjustments, the air conditioner based on a second parameter value corresponding to the first control parameter subjected to adjustments, and keep the first parameter value corresponding to the first control parameter subjected to adjustments unchanged in the first mode.

It should be noted that the above explanations of the methods for controlling the air conditioner also apply to the apparatus for controlling the air conditioner in embodiments of the present disclosure, and will not be repeated here.

In some embodiments of the present disclosure, when the operation mode of the air conditioner is the first mode, the first parameter value corresponding to the first control parameter in the first mode is obtained. The first mode is the mode of controlling the operation of the air conditioner based on the preference. The air conditioner is then controlled based on the first parameter value. In the case where the first control parameter is adjusted, the air conditioner is controlled based on the second parameter value after the first control parameter is adjusted, and the first parameter value corresponding to the first control parameter in the first mode is not updated. According to embodiments of the present disclosure, in the case where the air conditioner is intelligently controlled in the first mode based on the preference, if the user has the needs to adjust the control parameters, the operation state of the air conditioner can be further adjusted according to the user's needs, and thus reducing the operation steps required for controlling of the air conditioner, and improving the convenience and the flexibility in the air conditioner control. FIG. 5 shows a block diagram of an air conditioner suitable for implementing one or more embodiments of the present disclosure. The air conditioner 12 shown in FIG. 5 is only an example and should not impose any limitations on the functionality and scope of use of embodiments of the present disclosure.

As shown in FIG. 5, an air conditioner 12 is embodied in the form of a general-purpose computing device. The components of the air conditioner 12 can include but are not limited to one or more processors or processing units 16, a memory 28, and a bus 18 connecting different system components (including the memory 28 and the processing unit 16).

The bus 18 represents one or more of several types of bus structures, including a memory bus or a memory controller, a peripheral bus, a graphics acceleration port, a processor, or a local bus using any of multiple bus structures. For example, these architectures include but are not limited to Industry Standard Architecture (ISA) bus, Micro Channel Architecture (MAC) bus, Enhanced ISA bus, Video Electronics Standards Association (VESA) local bus, and Peripheral Component Interconnection (PCI) bus.

The air conditioner 12 typically includes multiple computer-readable media. These media can be any available media that can be accessed by the air conditioner 12, including volatile and non-volatile media, movable and immovable media.

The memory 28 can include computer system readable media in the form of volatile memory, such as Random Access Memory (RAM) 30 and/or cache 32. The air conditioner 12 can further include other movable/immovable, volatile/non-volatile computer system storage media. For example, the storage system 34 can be used to read and write immovable, non-volatile magnetic media (not shown in FIG. 5, commonly referred to as "hard disk drive").

Although not shown in FIG. 5, disk drives for reading and writing to movable non-volatile magnetic disks (such as "floppy disks") and optical disk drives for reading and writing to movable non-volatile optical disks (such as Compact Disc Read Only Memory (CD-ROM), Digital Video Disc Read Only Memory (DVD ROM), or other optical media) can be provided. In these cases, each drive can be connected to the bus 18 through one or more data media interfaces. The memory 28 can include at least one program product having a set (e.g., at least one) of program modules configured to perform the functions of the embodiments disclosed herein.

A program/utility 40 having a set (at least one) of program modules 42, which can be stored in, for example, memory 28, such program modules 42 including but not limited to an operating system, one or more application programs, other program modules, and program data, each of which in some combination can include an implementation of a network environment. The program module 42 typically performs the functions and/or methods described in the embodiments disclosed herein.

The air conditioner 12 can also communicate with one or more external devices 14 (such as keyboards, pointing devices, displays 24, etc.), as well as with one or more devices that enable the human body to interact with the air conditioner 12, and/or with any device that enables the air conditioner 12 to communicate with one or more other computing devices (such as network cards, modems, etc.). The communication can be conducted through input/output (I/O) interface 22. Moreover, the air conditioner 12 can also communicate with one or more networks, such as a local area network (LAN), a wide area network (WAN), and/or a public network, such as the Internet, through the network adapter 20. As shown in the figure, the network adapter 20 communicates with other modules of air conditioner 12 through the bus 18. It should be understood that although not shown in the figure, other hardware and/or software modules can be used in conjunction with the air conditioner 12, including but not limited to microcode, device drivers, redundant processing units, external disk drive arrays, RAID systems, tape drives, and data backup storage systems.

The processing unit 16 executes various functional applications and data processing by running programs stored in the memory 28, such as implementing the method for controlling the air conditioner mentioned in the previous embodiments.

In order to implement the above embodiments, the present disclosure also provides a non-transitory computer-readable storage medium, which stores a computer program. When the program is executed by a processor, the methods for controlling the air conditioner provided in the above embodiments of the present disclosure are caused to be implemented.

In order to implement the above embodiments, the present disclosure also provides a computer program product. When the instructions in the computer program product are executed by a processor, the methods for controlling the air conditioner provided in the above embodiments of the present disclosure are caused to be implemented.

It should be noted that in the description of this disclosure, the terms "first", "second", etc. are only used for descriptive purposes and cannot be understood as indicating or implying relative importance. In addition, in the description disclosed herein, unless otherwise specified, the meaning of "multiple" refers to two or more.

Any process or method description in a flowchart or otherwise described herein can be understood as representing a module, fragment, or portion of code including executable instructions for implementing one or more steps of a specific logic function or process, and the scope of the preferred embodiments disclosed herein includes alternative implementations, which may not be in the order shown or discussed, but may be performed in a substantially simultaneous manner or in reverse order based on the functions involved, which should be understood by those skilled in the art to which the embodiments disclosed herein belong.

It should be understood that the various parts disclosed herein can be implemented using hardware, software, firmware, or a combination thereof. In the above embodiments, multiple steps or methods can be implemented using software or firmware stored in memory and executed by a suitable instruction execution system. For example, if implemented in hardware, as in another implementation, any one or a combination of the following techniques known in the art can be used: discrete logic circuits with logic gate circuits for implementing logic functions on data signals, application specific integrated circuits with suitable combinational logic gate circuits, programmable gate arrays (PGA), field programmable gate arrays (FPGA), etc.

Ordinary technical personnel in this field can understand that all or part of the steps carried by the method of implementing the above embodiments can be completed by instructing relevant hardware through a program. The program can be stored in a computer-readable storage medium, and when executed, it includes one or a combination of the steps of the method embodiment.

In addition, the various functional units in the disclosed embodiments can be integrated into one processing module, or they can exist separately physically, or two or more units can be integrated into one module. The integrated modules mentioned above can be implemented in the form of hardware or software functional modules. If the integrated modules are implemented in the form of software functional modules and sold or used as independent products, they can also be stored in a computer-readable storage medium.

The storage medium mentioned above can be read-only memory, magnetic disk or optical disk, etc.

In the description of this manual, the reference to the terms "one embodiment", "some embodiments", "examples", "specific examples", or "some examples" means that the specific features, structures, materials, or characteristics described in conjunction with the embodiment or example are included in at least one embodiment or example disclosed herein. In this manual, the illustrative expressions of the above terms may not necessarily refer to the same embodiments or examples. Moreover, the specific features, structures, materials, or characteristics described can be combined in any one or more embodiments or examples in a suitable manner.

## Claims

1. A method for controlling an air conditioner, comprising:
obtaining (S101, S201), in response to an operation mode of the air conditioner being a first mode, a first parameter value corresponding to a first control parameter in the first mode, wherein the first mode is a mode of controlling an operation of the air conditioner based on a preference, and comprises preset correspondence between the first control parameter and the first parameter value;
controlling (S102, S202, S303), based on the first parameter value, the operation of the air conditioner; and
controlling (S103, S203, S305), in response to the first control parameter being subjected to adjustments, the air conditioner based on a second parameter value corresponding to the first control parameter subjected to adjustments, and keeping the first parameter value corresponding to the first control parameter subjected to adjustments unchanged in the first mode.

2. The method according to claim 1, further comprising:
controlling (S204), in response to the first control parameter subjected to adjustments being of a preset type, the air conditioner to exit the first mode; and
controlling (S205), in response to the first control parameter subjected to adjustments being not of the preset type, the air conditioner to stay in the first mode.

3. The method according to claim 1 or 2, further comprising:
in response to a first number of first control parameters subjected to adjustments being less than a total number of first control parameters, controlling the air conditioner based on first parameter values corresponding to first control parameters not subjected to adjustments and second parameter values corresponding to the first control parameters subjected to adjustments.

4. The method according to any of claims 1 to 3, wherein obtaining the first parameter value corresponding to the first control parameter in the first mode, comprises one of:
determining, in response to the first mode being a recommended preference mode, a recommended parameter value corresponding to the first control parameter sent by a server as the first parameter value corresponding to the first control parameter in the recommended preference mode; and
determining, in response to the first mode being a custom preference mode, an obtained custom parameter value corresponding to the first control parameter as the first parameter value corresponding to the first control parameter in the custom preference mode.

5. The method according to claim 4, wherein determining the recommended parameter value corresponding to the first control parameter sent by the server as the first parameter value corresponding to the first control parameter in the recommended preference mode, comprises:
receiving (S301), in a first time period after the recommended preference mode is activated, the recommended parameter value corresponding to the first control parameter sent by the server based on a sending cycle; and
determining (S302) the recommended parameter value as the first parameter value.

6. The method according to claim 5, wherein keeping the first parameter value corresponding to the first control parameter subjected to adjustments unchanged in the first mode, comprises:
in response to the first control parameter being subjected to adjustments in the first time period and the first control parameter subjected to adjustments being not of a preset type, sending (S304) a first instruction to the server, wherein the first instruction is configured to instruct the server to stop sending the recommended parameter value corresponding to the first control parameter subjected to adjustments.

7. The method according to any of claims 1 to 6, further comprising:
determining that an adjustment of the operation mode of the air conditioner is completed; and
controlling the air conditioner to exit the first mode.

8. An air conditioner (12), comprising:
at least one processor (16); and
a memory (28) connected in communication with the at least one processor;
wherein the memory stores instructions executable by the at least one processor, which when executed by the at least one processor, cause the at least one processor to be configured to:
obtain, in response to an operation mode of the air conditioner being a first mode, a first parameter value corresponding to a first control parameter in the first mode, wherein the first mode is a mode of controlling an operation of the air conditioner based on a preference, and comprises preset correspondence between the first control parameter and the first parameter value;
control, based on the first parameter value, the operation of the air conditioner; and
control, in response to the first control parameter being subjected to adjustments, the air conditioner based on a second parameter value corresponding to the first control parameter subjected to adjustments, and keep the first parameter value corresponding to the first control parameter subjected to adjustments unchanged in the first mode.

9. The air conditioner (12) according to claim 8, wherein the at least one processor (16) is further configured to:
control, in response to the first control parameter subjected to adjustments being of a preset type, the air conditioner to exit the first mode; and
control, in response to the first control parameter subjected to adjustments being not of the preset type, the air conditioner to stay in the first mode.

10. The air conditioner (12) according to claim 8 or 9, wherein the at least one processor (16) is further configured to:
in response to a first number of first control parameters subjected to adjustments being less than a total number of first control parameters, control the air conditioner based on first parameter values corresponding to first control parameters not subjected to adjustments and second parameter values corresponding to the first control parameters subj ected to adjustments.

11. The air conditioner (12) according to any of claims 8 to 10, wherein the at least one processor (16) is further configured to perform one of:
determine, in response to the first mode being a recommended preference mode, a recommended parameter value corresponding to the first control parameter sent by a server as the first parameter value corresponding to the first control parameter in the recommended preference mode; and
determine, in response to the first mode being a custom preference mode, an obtained custom parameter value corresponding to the first control parameter as the first parameter value corresponding to the first control parameter in the custom preference mode.

12. The air conditioner (12) according to claim 11, wherein the at least one processor (16) is further configured to:
receive, in a first time period after the recommended preference mode is activated, the recommended parameter value corresponding to the first control parameter sent by the server based on a sending cycle; and
determine the recommended parameter value as the first parameter value.

13. The air conditioner (12) according to claim 12, wherein the at least one processor (16) is further configured to:
in response to the first control parameter being subjected to adjustments in the first time period and the first control parameter subjected to adjustments being not of a preset type, send a first instruction to the server, wherein the first instruction is configured to instruct the server to stop sending the recommended parameter value corresponding to the first control parameter subjected to adjustments.

14. The air conditioner (12) according to any of claims 8 to 13, wherein the at least one processor (16) is further configured to:
determine that an adjustment of the operation mode of the air conditioner is completed; and
control the air conditioner to exit the first mode.

15. A non-transitory computer-readable storage medium having computer instructions stored thereon, which when executed by a computer, cause the computer to implement the method according to any of claims 1 to 7.
